# EUROPÄISCHE PATENTSCHRIFT

(11) **EP 0 901 404 B1**
(45) Veröffentlichungstag und Bekanntmachung des Hinweises auf die Patenterteilung: **12.12.2001**
(21) Anmeldenummer: 97922936.6
(22) Anmeldetag: 02.05.1997
(51) Int. Cl.: B01D 39/00, B01J 20/28, B32B 15/08

(54) **FILTERMATERIAL UND VERFAHREN ZU SEINER HERSTELLUNG SOWIE AUS DIESEM FILTERMATERIAL HERGESTELLTER ADSORPTIONSFILTER**
FILTERING MATERIAL AND PROCESS FOR THE PRODUCTION THEREOF, AND ADSORPTION FILTER PRODUCED FROM SAID FILTERING MATERIAL
MATERIAU FILTRANT, SON PROCEDE DE PRODUCTION, ET FILTRE ADSORBANT PRODUIT AU MOYEN DUDIT MATERIAU FILTRANT

(30) Priorität: 03.05.1996 DE 19617755; 02.11.1996 DE 19645194; 02.11.1996 DE 19645195; 18.01.1997 DE 19701658; 18.03.1997 DE 19711230
(43) Veröffentlichungstag der Anmeldung: 17.03.1999
(73) Patentinhaber: MHB Filtration GmbH & CO. KG, 40699 Erkrath (DE)
(72) Erfinder: DE RUITER, Ernest, D-51381 Leverkusen (DE); TÖRNBLOM, Jonas, D-40699 Erkrath (DE)
(74) Vertreter: Voth, Gerhard
(86) Internationale Anmeldenummer: EP9702243
(87) Internationale Veröffentlichungsnummer: WO9741941

(56) Entgegenhaltungen:
- EP-A- 0 262 230
- DE-A- 2 164 262
- DE-A- 3 200 959
- DATABASE WPI Section Ch, Week 7745 Derwent Publications Ltd., London, GB; Class J01, AN 77-79963Y XP002037456 & JP 52 114 484 A (KOBAYASHI KK) , 26.September 1977

## Beschreibung

Die vorliegende Erfindung betrifft Filtermaterialien mit adsorbierenden Eigenschaften sowie ein Verfahren zu ihrer Herstellung. Gleichermaßen hat die vorliegende Erfindung Adsorptionsfilter zum Gegenstand, die aus mindestens zwei Lagen dieser Filtermaterialien bestehen.

Aus dem Stand der Technik sind verschiedene Filtermaterialien bekannt: So kennt man beispielsweise Schüttfilter, bei denen das Filtermaterial aus einer losen Schüttung von Adsorptionsmaterialien besteht, die notwendigerweise durch ein Gehäuse oder Behälter zusammengehalten werden müssen. Diese klassischen Schüttfilter weisen eine Reihe von zum Teil schwerwiegenden Nachteilen auf. Denn bei der Wahl der Teilchengröße sind insofern Beschränkungen auferlegt, als einerseits ein zu kleiner Teilchendurchmesser der Adsorberpartikel einen zu hohen Strömungswiderstand bedingt und andererseits ein zu großer Teilchendurchmesser eine schlechte Adsorptionskinetik zur Folge hat. Da das Adsorptionsmaterial als lose Schüttung vorliegt, kommt es regelmäßig zu Durchbrüchen. Zudem kann es infolge von Vibrationen oder Erschütterungen bei der Verwendung solcher Schüttfilter zu einem Abrieb des Adsorptionsmaterials kommen.
Diese Nachteile herkömmlicher Schüttfilter versucht man zu umgehen, indem man sogenannte Flächenfilter herstellt, die aus einem luftdurchlässigen Trägermaterial bestehen, auf das zunächst diskontinuierlich, im allgemeinen punkt- oder linienförmig, ein Klebstoff aufgetragen werden muß, an dem die Adsorberteilchen anschließend fixiert werden. Bei dem luftdurchlässigen Trägermaterial kann es sich um ein Gewebe oder Gewirke oder auch einen offenporigen, retikulierten PUR-Schaumstoff handeln. Der Nachteil dieser Flächenfilter liegt in ihrer im allgemeinen aufwendigen Herstellung und in ihrer nicht immer ausreichenden Formstabilität. Zudem kommt es sowohl bei ihrer Herstellung als auch bei der anschließenden Verwendung immer wieder zur Geruchsbelästigung insbesondere durch Abbauprodukte oder Lösungsmittelkomponenten der verwendeten Klebstoffe.

Die Aufgabe der vorliegenden Erfindung besteht darin, ein leicht zugängliches Filtermaterial mit adsorbierenden Eigenschaften bereitzustellen, das insbesondere formstabil, aber dennoch leicht zu prägen und/oder zu falten ist und die Nachteile der Filtermaterialien des Standes der Technik vermeidet.
Gegenstand der vorliegenden Erfindung ist gleichermaßen die Bereitstellung eines Verfahrens zur Herstellung eines solchen Filtermaterials, das insbesondere ohne die Verwendung herkömmlicher Klebstoffe auskommt.
Eine weitere Aufgabe der vorliegenden Erfindung wird darin gesehen, Adsorptionsfilter bereitzustellen, die mindestens zwei Lagen dieser Filtermaterialien enthalten.

Die erfindungsgemäße Aufgabe wird durch ein Filtermaterial mit adsorbierenden Eigenschaften gelöst, das einen flächigen Träger aus Metallfolie, Papier oder Karton umfaßt, der einseitig oder beidseitig mit einer unter Erwärmen klebrig werdenden Haftschicht versehen ist, an der ein Adsorptionsmaterial thermisch zum Haften gebracht ist, d.h. unter Erwärmen der Haftschicht daran fixiert ist.

Die Metallfolie ist insbesondere eine Aluminium- oder Kupferfolie, wobei die Dicke der Metallfolie je nach Verwendungszweck variieren kann. Die Schichtdicke sollte aber mindestens 5 µm betragen; vorzugsweise beträgt sie mindestens 10 µm, insbesondere mindestens 40 µm. Ein bevorzugtes Trägermaterial ist eine mit einem Polyolefin beschichtete Aluminiumfolie, wie sie beispielsweise in der Verpackungsindustrie Anwendung findet, wobei eine sich unter Umständen auf der Rückseite befindende, als Verstärkung gedachte Polyesterfolie nicht weiter stört, sofern keine zu hohen Temperaturen auftreten.

Das Paper oder der Karton weist im allgemeinen eine Schichtdicke von 0,1 bis 2 mm, vorzugsweise von 0,2 bis 1 mm, auf. Dies entspricht einem Flächengewicht des Papiers oder Kartons von mindestens etwa 40 g/m².
Insbesondere wird ein einseitig oder beidseitig mit Kunststoff beschichtetes, steifes, prägbares Papier verwendet, wobei der Kunststoff durch thermische Behandlung klebrig wird und als Haftmasse für die Adsorbentien dient.

Eine bestimmte Mindestdicke des Trägermaterials ist erforderlich, um eine gewisse Mindestformstabilität des Trägermaterials zu gewährleisten. Andererseits darf eine bestimmte Schichtdicke nicht überschritten werden, damit das Trägermaterial verarbeitbar, insbesondere prägbar, bleibt.

Die unter Erwärmen klebrig werdende Haftschicht ist vorzugsweise eine Polyolefinschicht, insbesondere eine Polyethylen- oder Polypropylenschicht.

Die unter Erwärmen klebrig werdende Haftschicht weist im allgemeinen eine Schichtdicke von mindestens 0,005 mm, vorzugsweise von mindestens 0,01 mm, insbesondere von 0,02 mm, auf.
Eine Schichtdicke von mindestens 0,005 mm ist erforderlich, um ein dauerhaftes Fixieren des Adsorptionsmaterials auch unter Beanspruchung, Erschütterung oder Vibration zu gewährleisten. D.h. die Haftschicht sollte zwecks Erreichen einer guten Haftung, insbesondere beim Einsatz von Adsorberkörnern mit Durchmessern von mehr als 0,2 mm, 0,005 mm nicht unterschreiten.

Die Haftschicht wird in einer Menge von mindestens 5 g/m^{2,} vorzugsweise mindestens 10 g/m², auf dem Träger appliziert.

Erfindungsgemäß geeignete Adsorptionsmaterialien sind vorzugsweise ausgewählt aus der Gruppe von Aktivkohle, porösen Polymeren, Molekularsieben, Ionenaustauschern und Speicherpolymeren (= Polymere, die mit einem Wirkstoff unterschiedlichster Art beladen oder gefüllt sind und diesen langsam abgeben).

Beispielsweise kann das Adsorptionsmaterial aus körnigen oder kugelförmigen Adsorberteilchen bestehen, die vorzugsweise Korngrößen von 0,1 bis 2,0 mm, insbesondere Korngrößen von 0,2 bis 1 mm, haben, wobei sich durch die Größe der Adsorberkörner und deren Menge der Druckverlust gezielt steuern läßt. Die erfindungsgemäß verwendeten Teilchen weisen im allgemeinen eine innere Oberfläche (BET) von mindestens 500 m²/g, vorzugsweise von mindestens 900 m²/g, auf.

Erfindungsgemäß geeignete Adsorberteilchen sind insbesondere abriebfest.

Das bevorzugte Adsorbens ist Aktivkohle. Gemäß einer besonderen Ausführungsform der vorliegenden Erfindung kann es sich hierbei um kugelförmige Aktivkohleteilchen oder Kornkohle handeln. Bei der Wahl der Aktivkohle sind sehr abriebfeste Sorten empfehlenswert, weil sonst beim Absaugen und Rückführen der überschüssigen Adsorberteilchen zur Streuvorrichtung Staub entstehen würde, der die heiße und klebrige Haftschicht sozusagen "abpudern" würde, was unter Umständen zu einer schlechteren Haftung der Aktivkohle führen würde.

Auch anorganische Adsorbentien wie z.B. Zeolite oder spezielle Formulierungen können beispielsweise zur Adsorption von H₂S, NH₃ bzw. CO eingesetzt werden. Gleichermaßen sind "poröse Polymere", wie sie beispielsweise unter dem Namen SORBATHENE angeboten werden, für die Erfindung geeignet. Insbesondere handelt es sich bei den "porösen Polymeren" um kugelförmige Adsorbentien.

Auch geschwelte und aktivierte Polymerkügelchen, insbesondere sulfonierte geschwelte und aktivierte Polymerkügelchen, sind erfindungsgemäß als Adsorberteilchen geeignet.

Schließlich können erfindungsgemäß auch Ionenaustauscher, Speicherpolymere (d.h. Polymere, die mit einem Wirkstoff unterschiedlichster Art beladen oder gefüllt sind und diesen langsam abgeben), aber auch Silicagel-Perlen verwendet werden, wobei in Zusammenhang mit einer z.B. elektrisch aufheizbaren Metallfolie als Träger eine regenerative Trocknung realisiert werden kann.

Wenn als Adsorptionsmaterial körnige oder kugelförmige Adsorptionspartikel verwendet werden, können die erfindungsgemäßen Filtermaterialien gemäß dem folgenden Verfahren hergestellt werden:
a) Zunächst führt man einen einseitig oder beidseitig mit einer unter Erwärmen klebrig werdenden Haftschicht beschichteten Träger aus Metallfolie, Papier oder Pappe durch ein Bett der heißen, zu fixierenden Adsorbentien, so daß die Adsorbentien mit der Haftschicht in Kontakt gebracht und an dieser fixiert werden;
b) gegebenenfalls werden die Adsorbentien hierbei angedrückt;
c) anschließend werden die überschüssigen Adsorptionspartikel entfernt, beispielsweise durch Rüttel- oder Vibrationsbewegungen oder durch Absaugen;
d) vor oder nach Entfernen der überschüssigen Adsorberteilchen in Schritt c) läßt man das auf diese Weise hergestellte Material abkühlen.

Wenn das Adsorptionsmaterial aus körnigen oder kugelförmigen Adsorberteilchen besteht und nur von einer Seite damit belegt werden soll, können die erfindungsgemäßen Filtermaterialien alternativ auch gemäß dem folgenden Verfahren hergestellt werden:
a) Ein einseitig mit einer unter Erwärmen klebrig werdenden Haftschicht beschichtetes Trägermaterial aus Metallfolie, Papier oder Pappe wird bis zum Klebrigwerden der Haftschicht erwärmt, wobei der Vorgang des Erwärmens vorzugsweise von der Seite des Trägermaterials her, d.h. von der der Haftschicht gegenüberliegenden Seite her, erfolgt;
b) die erwärmte, klebrig gewordene Haftschicht wird anschließend, gegebenenfalls unter Andrücken, mit den Adsorbentien in Kontakt gebracht, beispielsweise durch Bestreuen;
c) dann werden die überschüssigen Adsorberteilchen entfernt, beispielsweise durch Rüttelbewegung/Vibration oder Absaugen;
d) schließlich läßt man das auf diese Weise hergestellte Trägermaterial abkühlen, wobei dieser Verfahrensschritt vor oder nach Entfernung der überschüssigen Adsorberpartikel in Schritt c) erfolgen kann.

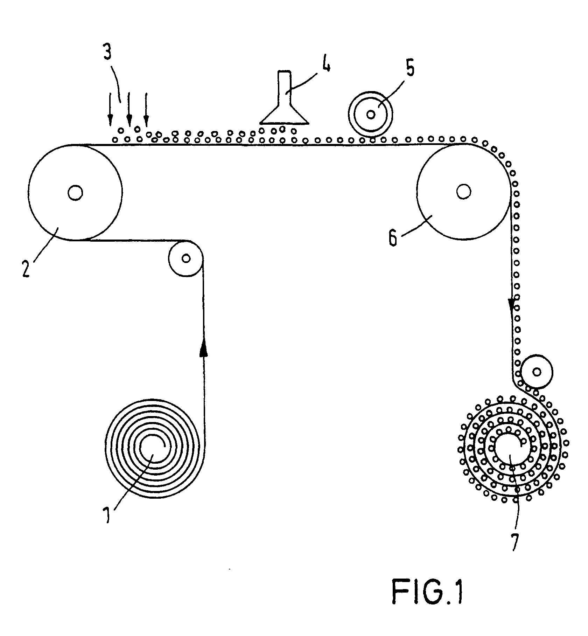

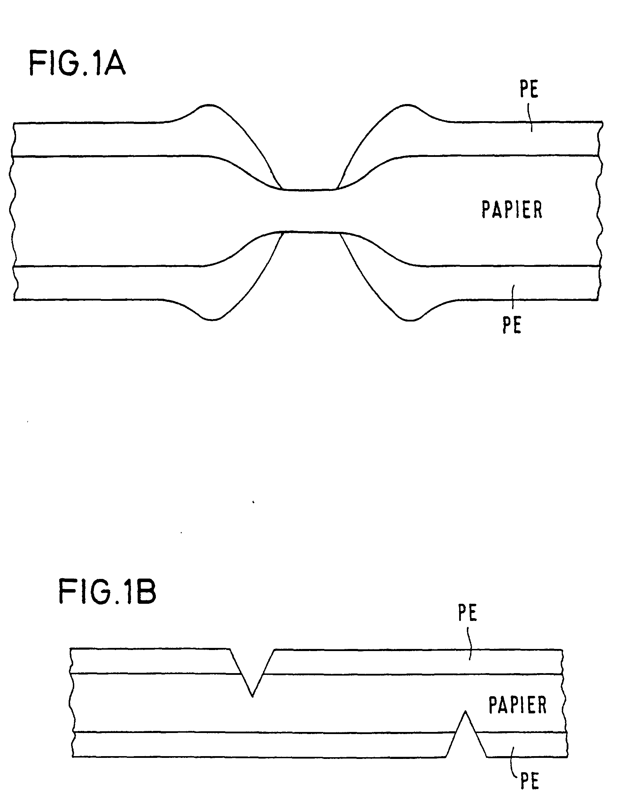

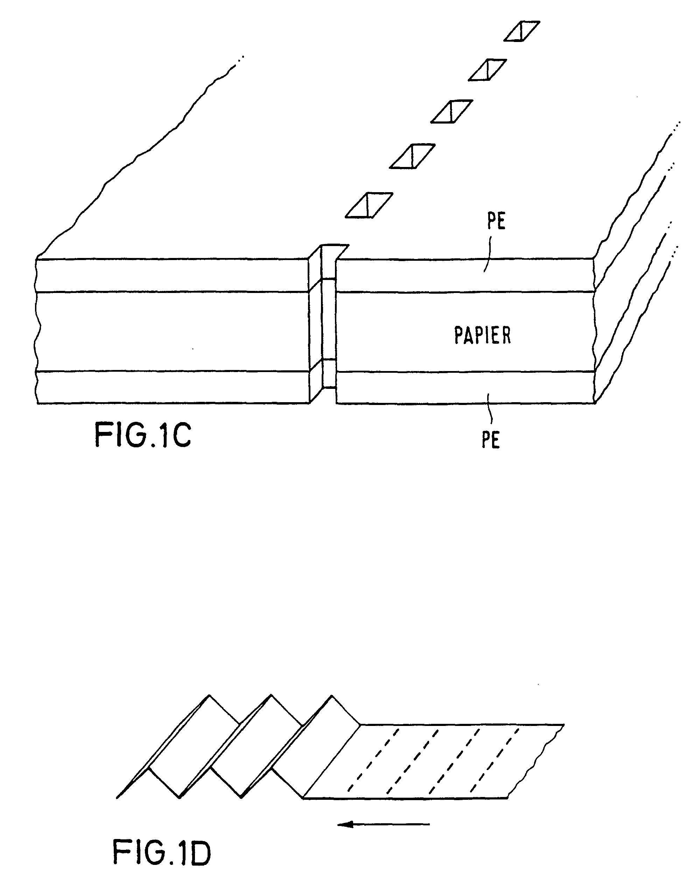

Die beiliegende Fig. 1 zeigt schematisch einen solchen Herstellungsprozeß gemäß dem alternativen erfindungsgemäßen Verfahren am Beispiel einer polyolefinbeschichteten Metallfolie. Man geht von einer einseitig mit einem Polyolefin beschichteten Metallfolie 1 aus, vorzugsweise einer Aluminiumfolie, wie sie heute für viele Anwendungen eingesetzt wird und in den verschiedensten Stärken erhältlich ist. Diese Folie wird auf der Aluminiumseite bis auf circa 200 bis 250 °C aufgeheizt und anschließend mit körnigen Adsorbentien bestreut. Das Aufheizen erfolgt, indem die mit Polyolefin beschichtete Folie über eine aufgeheizte Trommel 2 geleitet und sofort danach über eine Bestreuungsvorrichtung 3 mit den Adsorbentien bestreut wird, deren Überschuß durch Absaugen mit einer Absaugung 4 oder durch einfaches Abschütteln entfernt wird. Um ein schnelles Aufheizen zu garantieren, sollte die Umschlingung der Trommel mehr als 90°, vorzugsweise 180° oder mehr, betragen. Gegebenenfalls wird das Adsorptionsmaterial zur besseren Fixierung mit einer Andruckwalze 5 angedrückt. Anschließend wird das auf diese Weise erhaltene Produkt zwecks Abkühlung über eine Kühltrommel 6 geführt und schließlich über eine Aufwickelvorrichtung 7 zu Rädern aufgewickelt. Alternativ besteht die Möglichkeit, die so erhaltene Folie zu Paketen zu schichten.

Gemäß einer weiteren Ausführungsform der vorliegenden Erfindung kann das Adsorptionsmaterial ein Aktivkohleflächengebilde sein, wie z.B. ein karbonisiertes und aktiviertes Vlies, Gewebe oder Gewirke. Insbesondere geeignet ist ein Aktivkohleflächengebilde mit einem Flächengewicht von 20 bis 150 g/m², vorzugsweise von 30 bis 80 g/m², und mit einer inneren Oberfläche von 500 bis 1.500 m²/g, vorzugsweise von 800 bis 1.300 m²/g.

Als Flächengebilde aus Aktivkohle werden aber auch Aktivkohleverbundmaterialien sowie mit Aktivkohle beladene, retikulierte PUR-Schaumstoffe angesehen, bei denen die aus Aktivkohle bestehenden Adsorberteilchen an den Stegen des Schaumes fixiert sind.

Das Aktivkohleflächengebilde kann in diesem Fall dadurch an dem mit der unter Erwärmen klebrig werdenden Haftschicht beschichteten, flächigen Träger fixiert werden, daß man das Aktivkohleflächengebilde auf mindestens einer Seite des Trägermaterials aufbringt, das auf mindestens einer Seite mit einer unter Erwärmen klebrig werdenden Haftschicht beschichtet ist, und man anschließend das Ganze bis zum Klebrigwerden der Haftschicht erhitzt und unter Druck miteinander verbindet, wobei der Vorgang des Erwärmens und Andrückens vorzugsweise gleichzeitig erfolgt, beispielsweise in einem Kalander.
Im allgemeinen läßt man das Aktivkohleflächengebilde zulaufen und drückt es gegen die klebrige, angeschmolzene Polyolefinschicht. Dabei können auch Kaschiermaschinen eingesetzt werden.

Ein interessantes Produkt läßt sich mit Hilfe von beidseitig mit einem Polyolefin beschichteter Folien, insbesondere Metallfolien, herstellen, die sich für die Fertigung hochwertiger Adsorptionsfilter hervorragend eignet. So können beispielsweise durch alternierende, glatte und gewellte (geprägte) Lagen aus dem Verbundmaterial Adsorptionsfilterblöcke von der Art Aktivkohleschicht/Haftschicht/Trägerfolie/Haftschicht/Aktivkohleschicht mit sehr regelmäßigen Kanälen hergestellt werden, die parallel zur Strömungsrichtung durchströmt werden. Die gute Kinetik der feinfaserigen Aktivkohleschicht zusammen mit der starken Querdiffusion (Brown'sche Bewegung) sorgen für eine optimale Adsorption, so daß solche Filterblöcke zur Entfernung von Schadstoffen in sehr geringer Konzentration aus Luftströmen besonders geeignet sind.

Weiter sei noch erwähnt, daß überall dort, wo eine gute Adsorptionskinetik, jedoch nur eine geringe Kapazität erforderlich ist, auch pulverförmige Adsorbentien verwendet werden können.

Das erfindungsgemäße Filtermaterial kann mit einer Prägung, insbesondere in Wellen- oder Zickzackform, versehen sein. Durch die Wellen- oder ZickzackPrägung werden sowohl die Stabilität als auch die adsorptiven Eigenschaften und der Druckverlust günstig beeinflußt.
Das erfindungsgemäße Filtermaterial ist im allgemeinen streifenförmig, und die Prägung kann senkrecht oder schräg zum Rand dieses Streifens verlaufen. Insbesondere kann der Winkel zwischen Prägung und Rand des streifenförmigen Filtermaterials Werte zwischen 10° und 170°, vorzugsweise zwischen 20° und 150°, annehmen. Je kleiner der Winkel zwischen den geprägten Wellen und dem Rand ist, desto geringer ist der Druckverlust, aber desto geringer sind auch Turbulenzen, die für die Adsorptionskinetik förderlich sind. Die Adsorptionsleistung hängt aber noch von vielen anderen Faktoren wie z.B. Menge, Art und Größe der Adsorbentien, Querschnitt und Länge der Kanäle, Verweilzeit, Strömungsgeschwindigkeit etc. ab, so daß der Fachmann den geeignetesten Aufbau des erfindungsgemäßen Adsorptionsfilters experimentell bestimmen wird, weil theoretische Berechnungen im allgemeinen schwierig und unter Umständen gar nicht möglich sind.

Neben Prägungen in Wellen- oder Zickzackform können auch Noppen- oder Kegelprägungen (pyramidales Muster) verwendet werden, wobei die Körner in den Tälern, an den Flanken und an den Spitzen der Prägungen haften.

Sofern es sich um körnige oder kugelförmige Adsorbentien handelt, wird man den Träger zunächst prägen (z.B. mit Zahnrädern), anschließend erhitzen und mit Adsorbentien bestreuen oder durch ein Bett mit heißen Adsorbentien ziehen.
Ist das Adsorbens ein flächiges, textiles Material aus Aktivkohle (Aktivekohleflächengebilde), so wird dieses üblicherweise auf einer Kaschiermaschine mit dem Träger verbunden, wobei letzterer flach sein muß. Eine Prägung kann deshalb nur am fertigen Material vorgenommen werden. Diese muß so durchgeführt werden, daß Beschädigungen des Aktivkohlegewebes, -gewirkes oder -vlieses vermieden werden. Deshalb wird hier eine Wellenprägung einer ZickzackPrägung vorgezogen.

Eine einfache Methode, eine Prägung auf dem Trägermaterial anzubringen, besteht darin, daß in bestimmten Abständen (d.h. im Abstand der gewünschten Faltung) in den zu beladenen Streifen bzw. Warenbahn des Trägermaterials quer zur Längsrichtung Schwachstellen eingeführt werden, die zum Zweck haben, daß sich das Material an diesen Stellen besonders leicht falten oder zu einer Zickzackform zusammenschieben läßt.

Es gibt dafür viele Möglichkeiten, wovon drei im folgenden aufgezeigt werden sollen, ohne daß dies als Einschränkung zu werten ist:
Eine erste Möglichkeit zeigt Fig 1A. Durch zwei warme Messer wird die Beschichtung (hier: eine Schicht aus Polyethylen PE) zur Seite gedrückt und das Papier oder die Aluminiumfolie zusammengequetscht.
Eine weitere Möglichkeit besteht darin, etwa bis zur Hälfte der Dicke wechselseitig Einschnitte vorzunehmen und auf diese Weise die zur Faltung benötigten Schwachstellen auszubilden (Fig. 1B).
Schließlich kann eine Perforation, insbesondere eine lineare Perforation, zur Ausbildung der zur Faltung benötigten Schwachstellen vorgenommen werden (Fig. 1C). Das Trägermaterial kann im flachen Zustand beladen und danach in die Zickzackform zusammengeschoben werden (Fig. 1D).

Gemäß einer weiteren Ausführungsform ist die Trägerschicht gelocht. Der Durchmesser der Löcher liegt im allgemeinen im Bereich von 0,1 bis 3 mm, vorzugsweise von 1 bis 2 mm.

Durch Kombination mindestens zweier Lagen des erfindungsgemäßen Filtermaterials läßt sich ein Adsorptionsfilter gemäß der vorliegenden Erfindung herstellen.

Das erfindungsgemäße Adsorptionsfilter kann parallel oder senkrecht zu den Lagen durchströmt werden. Ein senkrechtes Durchströmen ist insbesondere möglich, wenn das Trägermaterial perforiert bzw. mit Löchern versehen ist.

Die einzelnen Lagen des Filtermaterials, aus denen das Adsorptionsfilter besteht, können wellen- oder zickzackförmig geprägt sein, wobei die Prägungen oder Wellen zweier aufeinanderfolgender Lagen nicht parallel verlaufen, sondern einen Winkel zwischen 10° und 170°, vorzugsweise zwischen 20° und 150°, bilden und das Filter in Richtung der Wellen durchströmt wird.

Gemäß einer weiteren Ausführungsform der vorliegenden Erfindung können die einzelnen Lagen des Filtermaterials, aus denen das Adsorptionsfilter besteht, durch stäbchenförmige, parallel zur Strömungsrichtung angeordnete Abstandshalter getrennt sein.
Beispielsweise können in diesem Fall die einzelnen Lagen des Filtermaterials, aus denen das Adsorptionsfilter besteht, wellen- oder zickzackförmig geprägt sein und zwischen den Lagen parallel zur Strömungsrichtung stäbchenförmige Abstandshalter angeordnet sein, die vorzugsweise abwechselnd ober- und unterhalb einer Lage angeordnet sind, so daß die Lagen eine wellige Form annehmen und zwischen den Lagen Kanäle entstehen, die parallel zur Strömungsrichtung durchströmt werden.

Gemäß einer weiteren Ausführungsform der vorliegenden Erfindung ist das Adsorptionsfilter aus mehreren Lagen des erfindungsgemäßen Filtermaterials aufgebaut, wobei die Lagen kreuzförmig durchbohrt und die sich zwischen den kreuzförmigen Schlitzen befindenden, dreieckigen Flächen nach unten gebogen werden und dabei die Funktion eines Abstandhalters übernehmen und wobei die Durchbohrungen ("Durchbrüche") derart angeordnet sind, daß sie nicht übereinander, sondern seitlich versetzt liegen, so daß ein durch eine Durchbohrung strömendes Gas auf eine geschlossene, mit Adsorbentien belegte Stelle der nächsten Lage prallt und seitlich ausweichen muß. Ein derartiges Adsorptionsfilterpaket gemäß der vorliegenden Erfindung wird im allgemeinen senkrecht zu den Lagen durchströmt.

Gemäß noch einer weiteren Ausführungsform der vorliegenden Erfindung ist von den einzelnen Lagen, aus denen das Adsorptionsfilter aufgebaut ist, nur jede zweite Lage mit einer wellen- oder zickzackförmigen Prägung versehen ist, so daß parallel zu den Wellen Kanäle entstehen, die durchströmt werden können.

Durch eine geeignete Prägung, ein bestimmtes Übereinanderlegen bestimmter Lagen und gegebenenfalls die Verwendung eingelagerter Abstandshalter kann der Fachmann die Durchlässigkeit des aus mehreren Lagen der mit Adsorbentien beladenen erfindungsgemäßen Filtermaterialien des Adsorptionsfilters bestimmen.

Wenn die Trägerschicht geprägt ist, kann gemäß einer besonderen Ausführungsform der vorliegenden Erfindung die Prägung die Funktion eines Abstandhalters übernehmen.

Eine interessante Variante ist die Prägung mit gleichzeitiger Lochung des Trägers, so daß ein aus solchem Material hergestellter Adsorptionsfilterblock sowohl parallel als auch senkrecht zur Trägerschicht durchströmt werden kann. Hierbei sind Löcher mit Durchmessern bis zu 1 mm bevorzugt.

Interessante Anwendungen für die erfindungsgemäßen Adsorptionsfilter sind ihre Verwendung als Frischluft-Filter für Kfz-Kabinen, Klimaanlagen, aber auch Rotationsadsorber für die Industrie.

Kleine zerknüllte Streifen aus dem erfindungsgemäßen Filtermaterial sind als hochluftdurchlässige Füllungen für Schüttfilter verwendbar.

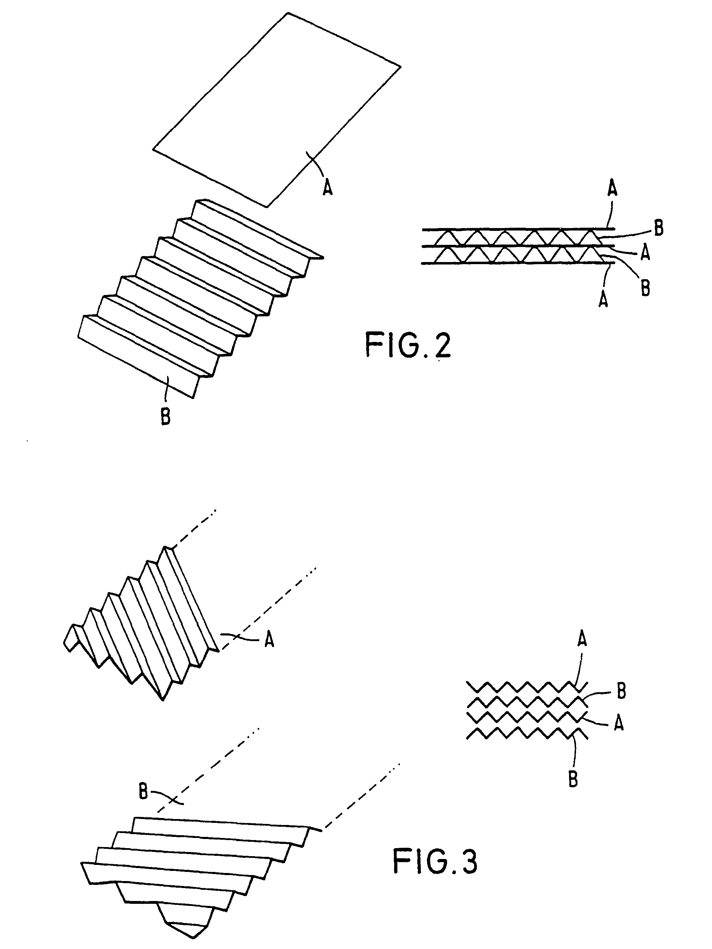

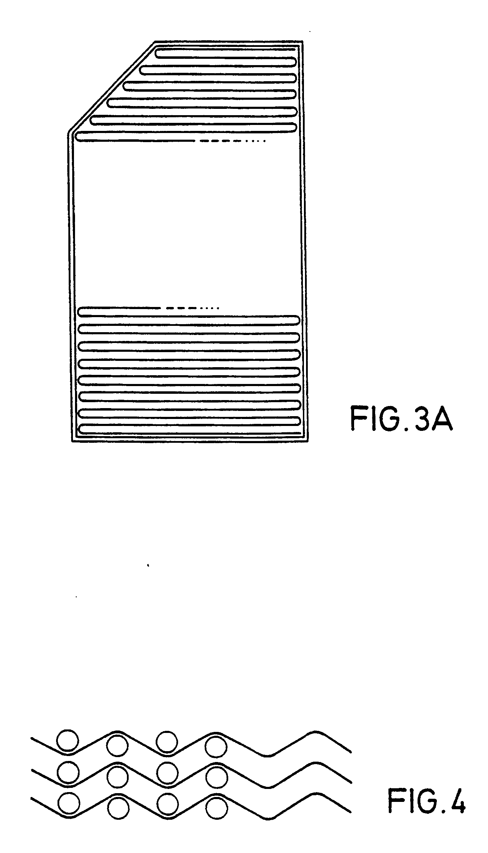

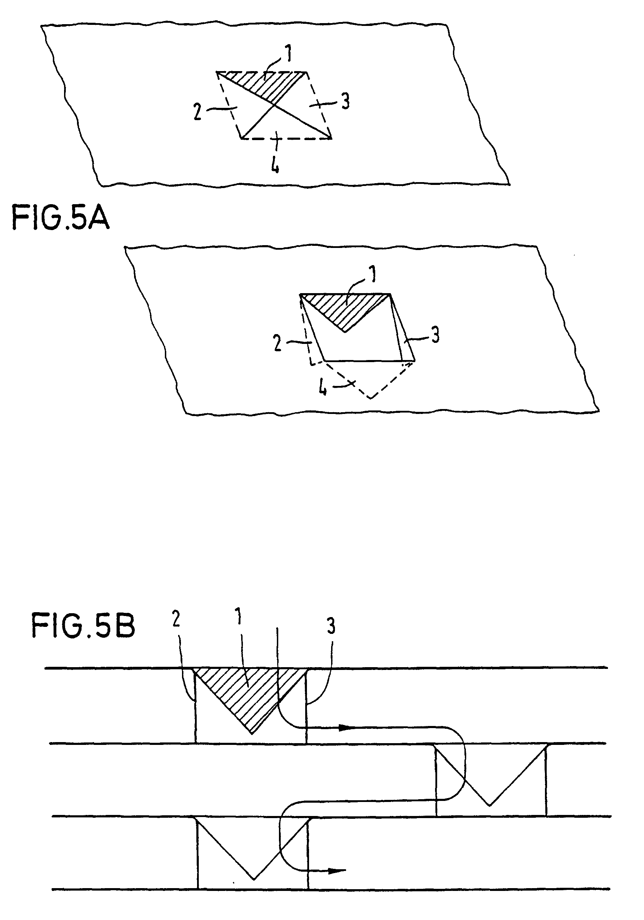

In den beiliegenden Fig. 2, 3, 3A, 4, 5A, 5B sind weitere Möglichkeiten für die Konstruktion von erfindungsgemäßen Hochleistungsadsorptionsfiltern dargestellt, die durch Kombination mehrerer Lagen des erfindungsgemäßen Filtermaterials hergestellt werden:
Eine erste Möglichkeit besteht darin, jeweils auf eine Schicht mit Wellen- oder Zickzackprägung eine solche ohne Prägung folgen zu lassen, so daß man eine Reihe von Kanälen erhält, die parallel zu den Schichten durchströmt werden können (Fig. 2). Aus den Lagen lassen sich dann die erfindungsgemäßen Adsorptionsfilterblöcke oder -filterräder zusammenbauen. Um die Filterblöcke seitlich abzuschließen, gibt es viele, dem Fachmann bekannte Möglichkeiten, wobei es vorteilhaft ist, die seitliche Abdichtung mit der Herstellung eines Rahmens zu kombinieren. Sogenannte Filterräder lassen sich am besten aus einem Streifenpaar herstellen, dessen Wellen zueinander einen Winkel bilden.
Eine weitere Möglichkeit besteht darin, die Wellen- oder Zickzackprägung schräg anzuordnen, wobei beim Bau eines Adsorptionsfilterblocks oder -filterrades die Wellen von zwei aufeinander folgenden Schichten einen Winkel bilden (Fig. 3). Damit werden zwei entscheidende Vorteile erreicht: Einerseits werden die für die Adsorptionskinetik so wichtigen Turbulenzen sehr stark erhöht, und andererseits ist das Ineinanderschieben der Lagen nicht mehr möglich, so daß Abstandshalter und Zwischenlagen nicht nötig sind.
Eine interessante Möglichkeit, einen Filterblock beliebiger Form herzustellen, besteht darin, daß ein mit Adsorbentien beladenes Band mit schräger Wellenprägung im Filterrahmen bzw. zwischen zwei Flächen hin- und hergefahren wird, bis die gewünschte Höhe erreicht ist. An der jeweiligen Knick- bzw. Umkehrstelle verändert sich die Richtung der Wellenprägung, so daß man automatisch die bereits beschriebenen gekreuzten Wellen erhält (Fig. 3A).
Eine Anordnung ohne jede Prägung zeigt Fig. 4. Es werden parallel zur Strömungsrichtung stäbchenförmige Abstandshalter oberhalb und unterhalb einer Lage angebracht, wodurch beim Zusammendrücken der Lagen ebenfalls Kanäle entstehen, deren Querschnitt durch Größe und Anzahl der Abstandshalter bestimmt wird.
Schließlich kann ein Filterpaket nicht parallel, sondern senkrecht zu den Lagen durchströmt werden. Hierfür werden in das beladene oder unbeladene Trägermaterial 0,5 bis 5 mm, vorzugsweise 1 bis 3 mm große Kreuze gestanzt und die sich zwischen den Balken der Kreuzes bildenden, dreieckigen Flächen nach unten gebogen (Abb. 5A). Sie bilden dann Abstandshalter zur folgenden Lage. Beim Zusammenfügen der Lagen ist darauf zu achten, daß die Löcher nicht übereinander liegen, so daß die Gase nach Durchtritt durch ein Loch auf eine geschlossene Adsorbentienschicht prallen und seitlich zum nächsten Loch ausweichen müssen (Abb. 5B). Auch hier werden kräftige Turbulenzen erzeugt.

Das erfindungsgemäße Filtermaterial weist gegenüber Flächenfiltern des Standes der Technik den entscheidenden Vorteil auf, daß es ohne die Verwendung herkömmlicher Klebstoffe hergestellt ist. Die Vermeidung von Klebstoffen durch die Verwendung einer unter Erwärmen klebrig werdenden Haftschicht hat zur Folge, daß bei Anwendung und unter Beanspruchung keine Geruchsbelästigung z.B. durch freigesetzte Kleberkomponenten oder -zersetzungsprodukte auftritt, wie dies bei Flächenfiltern des Standes der Technik oftmals der Fall ist.

Zudem weisen die erfindungsgemäßen Filtermaterialien den Vorteil auf, daß sie einerseits relativ formbeständig sind, jedoch andererseits auch noch hinreichend biegsam, falt- und knickbar sowie prägbar sind und somit dauerhaft in die gewünschte Form gebracht werden können. Neben ihrer einfachen Be- und Verarbeitungsmöglichkeit haben die erfindungsgemäßen Filtermaterialien eine verhältnismäßig hohe chemische Resistenz, insbesondere wenn der Träger eine Metallfolie ist.

Die erfindungsgemäßen Filterelemente zeichnen sich durch eine ausgezeichnete Kinetik bei geringem Druckverlust aus.

Ein weiterer Vorteil der erfindungsgemäßen Filterelemente liegt in der Möglichkeit einer "inneren" Aufheizung durch einen elektrischen Strom für den Desorptionsvorgang. D.h. insbesondere wenn das Trägermaterial eine wärmeleitfähige Metallfolie ist, kann das Filtermaterial zur Desorption und somit Regenerierung aufgeheizt werden.

Die erfindungsgemäßen Filtermaterialien können zudem mit verhältnismäßig geringem Aufwand hergestellt werden. Aus dem erfindungsgemäßen Herstellungsverfahren für das Filtermaterial resultiert ein Produkt mit regelmäßiger Struktur und gleichmäßiger Beladung, das über das gesamte Material den gleichen Strömungswiderstand besitzt. Insbesondere hat das erfindungsgemäße Verfahren den Vorteil, daß durch die Verwendung einer unter Erwärmen klebrig werdenden Haftschicht keine Geruchsbelästigung durch freigesetzte Kleberkomponenten oder -zersetzungsprodukte bei der Herstellung auftritt. Die auf diese Weise hergestellten, erfindungsgemäßen Filtermaterialien zeigen auch nach ihrer Herstellung unter Beanspruchung keine Freisetzung geruchsbelästigender Klebstoff(zersetzungs-)produkte.

Weitere Vorteile der vorliegenden Erfindung werden durch die folgenden Beispiele veranschaulicht, die jedoch keineswegs beschränkend sind.

### Beispiel 1

Eine ca. 12 µm dicke Aluminiumfolie, die auf der einen Seite mit einer ca. 25 µm dicken Polyethylenfolie und auf der anderen Seite durch eine Polyesterfolie abgedeckt war, wurde entsprechend der Schemazeichnung in Fig. 1 erhitzt. Es wurde anschließend ein 80 g/m² schweres Aktivkohlevlies zugeführt und leicht angepresst. Es resultierte ein flächiges Material, welches zu einem "Filterrad" von 5 cm Dicke und einem Durchmesser von 20 cm aufgerollt wurde.

### Beispiel 2

Eine 40 µm dicke Aluminiumfolie, die beidseitig mit einer 25 µm dicken Polyethylenschicht versehen war, wurde wie ein "Sandwich" zwischen zwei Aktivkohlevliese mit 80 g/m² in eine auf 180 °C aufgeheizte Kaschiermaschine der Firma Kannegießer eingeführt. Es resultierte eine sandwichartige Struktur, bestehend aus zwei Aktivkohlevliesen und zwischen diesen eingebettet die Aluminiumfolie. Das Material ließ sich wellenförmig prägen (Höhe der Welle: 3 mm; Abstand zwischen den Wellen: 6 mm). Aus alternierenden Schichten von geprägtem und nicht geprägten Material wurde ein Adsorptionsfilterblock aufgebaut, dessen parallel angeordnete Kanäle in Strömungsrichtung durchströmt werden konnten.

### Beispiel 3

Ein 80 g schweres Papier, das mit einer 20 g Polyethylen-Folie beschichtet war, wurde entsprechend der Schemazeichnung in Fig. 1 erhitzt und mit körnigen Adsorbentien bestreut. Diese wurden leicht angedrückt und hafteten nach Abkühlung ausgezeichnet auf dem Träger.

## Patentansprüche

1. Filtermaterial mit adsorbierenden Eigenschaften, umfassend einen flächigen Träger aus Metallfolie, Papier oder Karton, der einseitig oder beidseitig mit einer unter Erwärmen klebrig werdenden Haftschicht versehen ist, an der ein Adsorptionsmaterial thermisch zum Haften gebracht ist.

2. Filtermaterial nach Anspruch 1, **dadurch gekennzeichnet, daß** das Metall ausgewählt ist aus der Gruppe von Aluminium und Kupfer.

3. Filtermaterial nach Anspruch 2, **dadurch gekennzeichnet, daß** die Metallfolie eine Schichtdicke von mindestens 5 µm, vorzugsweise von mindestens 10 µm, insbesondere von mindestens 40 µm, aufweist.

4. Filtermaterial nach Anspruch 1, **dadurch gekennzeichnet, daß** das Papier oder der Karton eine Schichtdicke von 0,1 bis 2 mm, vorzugsweise von 0,2 bis 1 mm, aufweist.

5. Filtermaterial nach Anspruch 1 oder 4, **dadurch gekennzeichnet, daß** das Papier oder der Karton ein Flächengewicht von mindestens 40 g/m² aufweist.

6. Filtermaterial nach einem der Ansprüche 1 bis 5, **dadurch gekennzeichnet, daß** der Träger geprägt ist.

7. Filtermaterial nach Anspruch 6, **dadurch gekennzeichnet, daß** der Träger eine wellen- oder zickzackförmige Prägung aufweist.

8. Filtermaterial nach Anspruch 7, **dadurch gekennzeichnet, daß** das Filtermaterial streifenförmig ist und die Prägung senkrecht oder schräg zum Rand dieses Streifens verläuft.

9. Filtermaterial nach Anspruch 8, **dadurch gekennzeichnet, daß** die Prägung einen Winkel von 10° bis 170°, vorzugsweise von 20° bis 150°, bildet, bezogen auf den Rand des streifenförmigen Filtermaterials.

10. Filtermaterial nach einem der Ansprüche 1 bis 9, **dadurch gekennzeichnet, daß** die Trägerschicht gelocht ist.

11. Filtermaterial nach Anspruch 10, **dadurch gekennzeichnet, daß** die Löcher einen Durchmesser von 0,1 bis 3 mm, vorzugsweise von 1 bis 2 mm, aufweisen.

12. Filtermaterial nach einem der Ansprüche 1 bis 11, **dadurch gekennzeichnet, daß** die unter Erwärmen klebrig werdende Haftschicht eine Polyolefinschicht, insbesondere eine Polyethylenschicht oder eine Polypropylenschicht, ist.

13. Filtermaterial nach einem der Ansprüche 1 bis 12, **dadurch gekennzeichnet, daß** die unter Erwärmen klebrig werdende Haftschicht eine Schichtdicke von mindestens 0,005 mm, vorzugsweise von mindestens 0,01 mm, insbesondere von 0,02 mm, aufweist.

14. Filtermaterial nach einem der Ansprüche 1 bis 13, **dadurch gekennzeichnet, daß** die unter Erwärmen klebrig werdende Haftschicht in einer Menge von mindestens 5 g/m², vorzugsweise mindestens 10 g/m², auf dem Träger aufgetragen ist.

15. Filtermaterial nach einem der Ansprüche 1 bis 14, **dadurch gekennzeichnet, daß** das Adsorptionsmaterial ausgewählt ist aus der Gruppe von Aktivkohle, porösen Polymeren, Molekularsieben, Silicagel und Ionenaustauschern.

16. Filtermaterial nach Anspruch 15, **dadurch gekennzeichnet, daß** das Adsorptionsmaterial aus körnigen oder kugelförmigen Adsorberteilchen, vorzugsweise mit Korngrößen von 0,1 bis 2,0 mm, insbesondere mit Korngrößen von 0,2 bis 1 mm, besteht.

17. Filtermaterial nach Anspruch 15 oder 16, **dadurch gekennzeichnet, daß** das Adsorptionsmaterial aus kugelförmigen Aktivkohleteilchen oder Kornkohle besteht, vorzugsweise in abriebfester Form.

18. Filtermaterial nach Anspruch 15, **dadurch gekennzeichnet, daß** das Adsorptionsmaterial ein Aktivkohleflächengebilde ist.

19. Filtermaterial nach Anspruch 18, **dadurch gekennzeichnet, daß** das Aktivkohleflächengebilde ein Flächengewicht von 20 bis 150 g/m², vorzugsweise von 30 bis 80 g/m², aufweist und seine innere Oberfläche 500 bis 1.500 m²/g, vorzugsweise 800 bis 1.300 m²/g, beträgt.

20. Filtermaterial nach Anspruch 18 oder 19, **dadurch gekennzeichnet, daß** das Aktivkohleflächengebilde ein karbonisiertes und aktiviertes Vlies, Gewebe oder Gewirk ist.

21. Verfahren zur Herstellung eines Filtermaterials nach den Ansprüchen 1 bis 17, wobei das Filtermaterial als Adsorptionsmaterial körnige oder kugelförmige Adsorptionspartikel umfaßt, **dadurch gekennzeichnet, daß** das Verfahren die folgenden Arbeitsschritte umfaßt:
a) zunächst führt man einen einseitig oder beidseitig mit einer unter Erwärmen klebrig werdenden Haftschicht beschichteten Träger aus Metallfolie, Papier oder Pappe durch ein Bett der heißen, zu fixierenden Adsorbentien, so daß die Adsorbentien mit der Haftschicht in Kontakt gebracht und an dieser fixiert werden;
b) gegebenenfalls werden die Adsorbentien hierbei angedrückt;
c) anschließend werden die überschüssigen Adsorptionspartikel entfernt;
d) vor oder nach Entfernen der überschüssigen Adsorberteilchen in Schritt c) läßt man das auf diese Weise hergestellte Filtermaterial abkühlen.

22. Verfahren zur Herstellung eines Filtermaterials nach den Ansprüchen 1 bis 17, wobei das Filtermaterial als Adsorptionsmaterial körnige oder kugelförmige Adsorptionspartikel umfaßt, **dadurch gekennzeichnet, daß** das Verfahren die folgenden Arbeitsschritte umfaßt:
a) Erwärmen eines einseitig mit einer unter Erwärmen klebrig werdenden Haftschicht beschichteten Trägermaterials aus Metallfolie, Papier oder Pappe bis zum Klebrigwerden der Haftschicht, wobei der Vorgang des Erwärmens vorzugsweise von der Seite des Trägermaterials her, d.h. von der der Haftschicht gegenüberliegenden Seite, erfolgt;
b) Inkontaktbringen, vorzugsweise durch Bestreuen, der erwärmten, klebrig gewordenen Haftschicht mit den zu fixierenden Adsorbentien, gegebenenfalls unter Andrücken der Adsorberpartikel auf die Haftschicht;
c) Entfernung von überschüssigen Adsorberteilchen;
d) Abkühlenlassen des auf diese Weise hergestellten Filtermaterials vor oder nach Entfernung von überschüssigen Adsorberteilchen in Schritt c).

23. Verfahren zur Herstellung eines Filtermaterials nach den Ansprüchen 18 bis 20, **dadurch gekennzeichnet, daß** man ein Aktivkohleflächengebilde auf mindestens einer Seite eines Trägermaterials aufbringt, das auf mindestens einer Seite mit einer unter Erwärmen klebrig werdenden Haftschicht beschichtet ist, und man anschließend das Ganze bis zum Klebrigwerden der Haftschicht erhitzt und unter Druck miteinander verbindet, wobei der Vorgang des Erwärmens und Andrückens vorzugsweise gleichzeitig erfolgt.

24. Verfahren nach Anspruch 23, **dadurch gekennzeichnet, daß** das Aktivkohleflächengebilde ein karbonisiertes und aktiviertes Vlies, Gewebe oder Gewirk ist.

25. Verfahren nach Anspruch 23 und 24, **dadurch gekennzeichnet, daß** das Aktivkohleflächengebilde ein Flächengewicht von 20 bis 150 g/m², vorzugsweise von 30 bis 80 g/m², aufweist und seine innere Oberfläche 500 bis 1.500 m²/g, vorzugsweise 800 bis 1.300 m²/g, beträgt.

26. Adsorptionsfilter, **dadurch gekennzeichnet, daß** es mindestens zwei Lagen eines Filtermaterials nach den Ansprüchen 1 bis 20 umfaßt.

27. Adsorptionsfilter nach Anspruch 26, **dadurch gekennzeichnet, daß** es parallel oder senkrecht zu den Lagen durchströmbar ist.

28. Adsorptionsfilter nach Anspruch 26 oder 27, **dadurch gekennzeichnet, daß** die einzelnen Lagen des Filtermaterials, aus denen das Adsorptionsfilter besteht, wellen- oder zickzackförmig geprägt sind, wobei die Prägungen oder Wellen zweier aufeinanderfolgender Lagen nicht parallel verlaufen, sondern einen Winkel zwischen 10° und 170°, vorzugsweise zwischen 20° und 150°, bilden und das Filter in Richtung der Wellen durchströmbar ist.

29. Adsorptionsfilter nach Anspruch 26 oder 27, **dadurch gekennzeichnet, daß** die einzelnen Lagen des Filtermaterials, aus denen das Adsorptionsfilter besteht, durch stäbchenförmige, parallel zur Strömungsrichtung angeordnete Abstandshalter getrennt sind.

30. Adsorptionsfilter nach Anspruch 29, **dadurch gekennzeichnet, daß** die einzelnen Lagen des Filtermaterials, aus denen das Adsorptionsfilter besteht, wellen- oder zickzackförmig geprägt sind und zwischen den Lagen parallel zur Strömungsrichtung stäbchenförmige Abstandshalter angeordnet sind, die abwechselnd ober- und unterhalb einer Lage angeordnet sind, so daß die Lagen eine wellige Form annehmen und zwischen den Lagen Kanäle entstehen, die parallel zur Strömungsrichtung durchströmbar sind.

31. Adsorptionsfilter nach Anspruch 26 oder 27, **dadurch gekennzeichnet, daß** von den einzelnen Lagen, aus denen das Adsorptionsfilter aufgebaut ist, nur jede zweite Lage mit einer wellen- oder zickzackförmigen Prägung versehen ist, so daß parallel zu den Wellen Kanäle entstehen, die durchströmbar sind.

## Claims

1. Filter material with adsorbing properties, including a flat carrier which is formed from metal foil, paper or cardboard and is provided, on one side or both sides, with an adhesive layer, which becomes sticky when heated, and to which an adsorption material is thermally adhered.

2. Filter material according to claim 1, **characterised in that** the metal is selected from the group of aluminium and copper.

3. Filter material according to claim 2, **characterised in that** the metal foil has a layer thickness of at least 5 µm, preferably of at least 10 µm, more especially of at least 40 µm.

4. Filter material according to claim 1, **characterised in that** the paper or the cardboard has a layer thickness of 0.1 to 2 mm, preferably 0.2 to 1 mm.

5. Filter material according to claim 1 or 4, **characterised in that** the paper or the cardboard has a weight per unit area of at least 40 g/m².

6. Filter material according to one of claims 1 to 5, **characterised in that** the carrier is embossed.

7. Filter material according to claim 6, **characterised in that** the carrier has an undulatory or zigzag-shaped embossing.

8. Filter material according to claim 7, **characterised in that** the filter material is strip-like, and the embossing extends perpendicularly or inclinedly relative to the edge of this strip.

9. Filter material according to claim 8, **characterised in that** the embossing forms an angle of 10° to 170°, preferably 20° to 150°, relative to the edge of the strip-like filter material.

10. Filter material according to one of claims 1 to 9, **characterised in that** the carrier layer is perforated.

11. Filter material according to claim 10, **characterised in that** the perforations have a diameter of 0.1 to 3 mm, preferably 1 to 2 mm.

12. Filter material according to one of claims 1 to 11, **characterised in that** the adhesive layer, which becomes sticky when heated, is a polyolefin layer, more especially a polyethylene layer or a polypropylene layer.

13. Filter material according to one of claims 1 to 12, **characterised in that** the adhesive layer, which becomes sticky when heated, has a layer thickness of at least 0.005 mm, preferably at least 0.01 mm, more especially 0.02 mm.

14. Filter material according to one of claims 1 to 13, **characterised in that** the adhesive layer, which becomes sticky when heated, is applied to the carrier in a quantity of at least 5 g/m², preferably at least 10 g/m².

15. Filter material according to one of claims 1 to 14, **characterised in that** the adsorption material is selected from the group of active carbon, porous polymers, molecular screens, silica gel and ion exchangers.

16. Filter material according to claim 15, **characterised in that** the adsorption material comprises granular or ball-shaped adsorber particles, preferably having particle sizes of 0.1 to 2.0 mm, preferably having particle sizes of 0.2 to 1 mm.

17. Filter material according to claim 15 or 16, **characterised in that** the adsorption material comprises ball-shaped active carbon particles or granulated carbon, preferably in a wear-resistant form.

18. Filter material according to claim 15, **characterised in that** the adsorption material is a flat-shaped active carbon structure.,

19. Filter material according to claim 18, **characterised in that** the flat-shaped active carbon structure has a weight per unit area of 20 to 150 g/m², preferably 30 to 80 g/m², and its internal surface is 500 to 1,500 m²/g, preferably 800 to 1,300 m²/g.

20. Filter material according to claim 18 or 19, **characterised in that** the flat-shaped active carbon structure is a carbonised and activated non-woven mat, woven fabric or knitted fabric.

21. Method of producing a filter material according to claims 1 to 17, wherein the filter material includes granular or ball-shaped adsorption particles as the adsorption material, **characterised in that** the method includes the following operational steps:
a) initially a carrier, which is formed from metal foil, paper or cardboard and is coated on one side or both sides with an adhesive layer which becomes sticky when heated, is conducted through a bed of the hot adsorbing substances which are to be fixed, so that the adsorbing substances are brought into contact with the adhesive layer and are fixed thereto;
b) if necessary, the adsorbing substances are hereby compressed;
c) subsequently the excess adsorption particles are removed; and
d) prior to or after removal of the excess adsorber particles in step c), the filter material thus produced is left to cool.

22. Method of producing a filter material according to claims 1 to 17, wherein the filter material includes granular or ball-shaped adsorption particles as the adsorption material, **characterised in that** the method includes the following operational steps:
a) heating a carrier material, which is formed from metal foil, paper or cardboard and is coated with an adhesive layer which becomes sticky when heated, until the adhesive layer becomes sticky, the heating process preferably being effected from the side of the carrier material, i.e. from the side situated opposite the adhesive layer;
b) bringing into contact, preferably by spreading, the heated adhesive layer, which has become sticky, with the adsorbing substances to be fixed, if necessary by compressing the adsorber particles onto the adhesive layer;
c) removing the excess adsorber particles; and
d) allowing the filter material, thus produced, to cool-down prior to or after removal of excess adsorber particles in step c).

23. Method of producing a filter material according to claims 18 to 20, **characterised in that** a flat-shaped active carbon structure is applied to at least one side of a carrier material, which is coated on at least one side with an adhesive layer which becomes sticky when heated, and subsequently the whole assembly is heated until the adhesive layer becomes sticky and is joined together by pressure, the heating and compressing processes being preferably effected simultaneously.

24. Method according to claim 23, **characterised in that** the flat-shaped active carbon structure is a carbonised and activated non-woven mat, a woven fabric or a knitted fabric.

25. Method according to claims 23 and 24, **characterised in that** the flat-shaped active carbon structure has a weight per unit area of 20 to 150 g/m², preferably 30 to 80 g/m², and its internal surface is 500 to 1,500 m²/g, preferably 800 to 1,300 m²/g.

26. Adsorption filter, **characterised in that** it includes at least two layers of a filter material according to claims 1 to 20.

27. Adsorption filter according to claim 26, **characterised in that** it is traversable parallel to or perpendicularly relative to the layers.

28. Adsorption filter according to claim 26 or 27, **characterised in that** the individual layers of the filter material, from which the adsorption filter is formed, are embossed in an undulatory or zigzag-shaped manner, the embossings or undulations of two successive layers not extending parallel to each other, but forming an angle between 10° and 170°, preferably between 20° and 150°, and the filter is traversable in the direction of the undulations.

29. Adsorption filter according to claim 26 or 27, **characterised in that** the individual layers of the filter material, from which the adsorption filter is formed, are separated by bar-like spacer members disposed parallel to the direction of flow.

30. Adsorption filter according to claim 29, **characterised in that** the individual layers of the filter material, from which the adsorption filter is formed, are embossed in an undulatory or zigzag-shaped manner, and bar-like spacer members are disposed between the layers parallel to the direction of flow, which spacer members are disposed alternately above and below a layer, so that the layers assume an undulatory form, and channels, which are traversable parallel to the direction of flow, are produced between the layers.

31. Adsorption filter according to claim 26 or 27, **characterised in that**, of the individual layers from which the adsorption filter is constructed, only every second layer is provided with an undulatory or zigzag-shaped embossing, so that channels, which are traversable, are produced parallel to the undulations.

## Revendications

1. Matière filtrante ayant des propriétés adsorbantes, comprenant un support plat formé d'une feuille métallique, de papier ou de carton, muni sur une face ou les deux faces d'une couche thermoadhésive, et sur laquelle on accroche thermiquement une matière adsorbante.

2. Matière filtrante selon la revendication 1,
**caractérisée en ce que**
le métal est choisi dans le groupe formé par l'aluminium et le cuivre.

3. Matière filtrante selon la revendication 2,
**caractérisée en ce que**
la feuille métallique a une épaisseur de couche d'au moins 5 µm, de préférence d'au moins 10 µm et notamment d'au moins 40 µm.

4. Matière filtrante selon la revendication 1,
**caractérisée en ce que**
le papier ou le carton a une épaisseur de couche de 0,1 à 2 mm et de préférence de 0,2 à 1 mm.

5. Matière filtrante selon l'une quelconque des revendications 1 ou 4,
**caractérisée en ce que**
le papier ou le carton a une densité surfacique d'au moins 40 g/m².

6. Matière filtrante selon l'une quelconque des revendications 1 à 5,
**caractérisée en ce que**
le support est gaufré.

7. Matière filtrante selon la revendication 6,
**caractérisée en ce que**
le support à un gaufrage ondulé ou en zigzag.

8. Matière filtrante selon la revendication 7,
**caractérisée en ce que**
la matière du filtre est en forme de bande et le gaufrage est perpendiculaire au bord de la bande ou incliné par rapport à celui-ci.

9. Matière filtrante selon la revendication 8,
**caractérisée en ce que**
le gaufrage a un angle de 10° à 170°, de préférence de 20° à 150° par rapport au bord de la matière filtrante en forme de bande.

10. Matière filtrante selon l'une quelconque des revendications 1 à 9,
**caractérisée en ce que**
la couche de support est perforée.

11. Matière filtrante selon la revendication 10,
**caractérisée en ce que**
les trous ont un diamètre de 0,1 à 3 mm et de préférence compris entre 1 et 2 mm.

12. Matière filtrante selon l'une quelconque des revendications 1 à 11,
**caractérisée en ce que**
la couche thermoadhésive est une couche de polyoléfines, notamment une couche de polyéthylène ou une couche de polypropylène.

13. Matière filtrante selon l'une quelconque des revendications 1 à 12,
**caractérisée en ce que**
la couche thermoadhésive a une épaisseur d'au moins 0,005 mm, de préférence d'au moins 0,01 mm et notamment de 0,02 mm.

14. Matière filtrante selon l'une quelconque des revendications 1 à 13,
**caractérisée en ce que**
la couche thermoadhésive est appliquée suivant une quantité d'au moins 5 g/m², de préférence d'au moins 10 g/m² sur le support.

15. Matière filtrante selon l'une quelconque des revendications 1 à 14,
**caractérisée en ce que**
la matière adsorbante est sélectionnée dans le groupe des charbons actifs, des polymères poreux, des tamis moléculaires, du gel de silice ou les échangeurs d'ions.

16. Matière filtrante selon la revendication 15,
**caractérisée en ce que**
la matière adsorbante est composée de particules adsorbantes en forme de grains ou de billes et de préférence d'une granulométrie comprise entre 0,1 et 2,0 mm, notamment avec une granulométrie comprise entre 0,2 et 1 mm.

17. Matière filtrante selon l'une quelconque des revendications 15 ou 16,
**caractérisée en ce que**
la matière adsorbante est formée de particules de charbon actif, sphériques ou de grains de carbone, de préférence sous une forme résistant à l'abrasion.

18. Matière filtrante selon la revendication 15,
**caractérisée en ce que**
la matière adsorbante est une structure de surface de charbon actif.

19. Matière filtrante selon la revendication 18,
**caractérisée en ce que**
la structure de surface de charbon actif a une densité surfacique de 20 à 150 g/m², de préférence de 30 à 80 g/m² et sa surface intérieure est comprise entre 500 et 1500 m²/g, de préférence entre 800 et 1300 m²/g.

20. Matière filtrante selon l'une quelconque des revendications 18 ou 19,
**caractérisée en ce que**
la structure de surface de charbon actif est un non-tissé, un tissé ou un tricot carbonisé et activé.

21. Procédé de fabrication d'une matière filtrante selon l'une quelconque des revendications 1 à 17, selon lequel la matière filtrante contient comme matière adsorbante, des particules d'adsorption sous la forme de grains ou de billes,
**caractérisé par** les étapes de procédé suivantes :
a) tout d'abord on met un support formé d'une feuille de métal, de papier ou de carton, revêtu sur une face ou sur les deux faces d'une couche thermoadhésive, en faisant passer dans un lit chaud des matières adsorbantes qu'il faut fixer, pour que les matières adsorbantes soient mises en contact avec la couche thermoadhésive et se fixent sur celle-ci,
b) le cas échéant on presse les parties adsorbantes,
c) puis on enlève les particules d'adsorption, excédentaires,
d) avant ou après l'enlèvement des particules adsorbantes excédentaires, selon l'étape c), on laisse refroidir la matière filtrante ainsi réalisée.

22. Procédé de fabrication d'une matière filtrante selon l'une quelconque des revendications 1 à 17, la matière filtrante comprenant comme matière adsorbante, les particules d'adsorption sous forme de grains ou de billes,
**caractérisé par** les étapes de procédé suivantes :
a) on chauffe une matière de support formée d'une feuille métallique, de papier ou de carton, revêtue sur une face d'une couche thermoadhésive, jusqu'à ce que la couche adhérente devienne collante, l'opération de chauffage se fait de préférence par le côté de la matière de support, c'est-à-dire de la face opposée à celle portant la couche thermoadhésive,
b) on met en contact de préférence par projection, la couche thermoadhésive avec les produits absorbants qu'il faut fixer le cas échéant en pressant les particules adsorbantes sur la couche adhésive,
c) on enlève les particules adsorbantes en excédent,
d) on laisse refroidir la matière de filtre ainsi réalisé avant et après enlèvement des particules adsorbantes excédentaires de l'étape c).

23. Procédé de réalisation d'une matière filtrante selon l'une quelconque des revendications 18 à 20,
**caractérisé en ce qu'**
on applique la structure de surface de carbone actif sur au moins une face d'un élément de support revêtu sur au moins une face d'une couche thermoadhésive et ensuite on chauffe l'ensemble jusqu'à ce que la couche thermoadhésive devienne collante et on relie en comprimant, l'opération de réchauffage et de compression se faisant de préférence en même temps.

24. Procédé selon la revendication 23,
**caractérisé en ce que**
la structure de surface de carbone actif est un non-tissé, un tissu ou un tricot carbonisé et activé.

25. Procédé selon les revendications 23 et 24,
**caractérisé en ce que**
la structure de surface de carbone actif a une densité surfacique de 20 à 150 g/m², de préférence comprise entre 30 et 80 g/m² et sa surface superficielle intérieure est comprise entre 500 et 1500 m²/g, de préférence entre 800 et 1300 m²/g.

26. Filtre d'adsorption,
**caractérisé en ce qu'**
il se compose d'au moins deux couches d'une matière selon l'une des revendications 1 à 20.

27. Filtre d'adsorption selon la revendication 26,
**caractérisé en ce qu'**
il peut être traversé parallèlement ou perpendiculairement aux couches.

28. Filtre d'adsorption selon l'une quelconque des revendications 26 ou 27,
**caractérisé en ce que**
les différentes couches de matière filtrante composant le filtre d'adsorption sont gaufrées avec des ondulations ou des zigzags, les gaufrages ou les ondulations de deux couches n'étant pas parallèles mais faisant entre elles un angle compris entre 10° et 170°, de préférence entre 20° et 150° et le filtre est traversé par l'écoulement dans la direction des ondulations.

29. Filtre d'adsorption selon l'une quelconque des revendications 26 ou 27,
**caractérisé en ce que**
les différentes couches de matière filtrante dans lesquelles est réalisé le filtre d'adsorption sont séparées par des organes d'écartement en forme de tiges, parallèles à la direction d'écoulement.

30. Filtre d'adsorption selon la revendication 29,
**caractérisé en ce que**
les différentes couches de matière filtrante formant le filtre d'adsorption sont gaufrées avec des ondulations ou une forme de zigzag et entre les couches, parallèlement à la direction d'écoulement on a des organes d'écartement en forme de tiges prévus alternativement au-dessus et en dessous d'une couche de façon que les couches prennent une forme ondulée et qu'entre les couches il se forme des canaux parallèles à la direction d'écoulement pour être traversés.

31. Filtre d'adsorption selon l'une quelconque des revendications 26 ou 27,
**caractérisé en ce que**
parmi les différentes couches composant le filtre d'adsorption, seule chaque seconde couche est munie d'un gaufrage à ondulations ou en zigzags de sorte que l'on a des canaux en parallèle aux ondulations, et qui peuvent être traversés par le fluide.
